# EUROPÄISCHE PATENTSCHRIFT

(11) **EP 2 108 799 B1**
(45) Veröffentlichungstag und Bekanntmachung des Hinweises auf die Patenterteilung: **23.02.2011**
(21) Anmeldenummer: 09156585.3
(22) Anmeldetag: 30.03.2009
(51) Int. Cl.: F02C 7/36, F02C 7/32

(54) **Strahltriebwerk mit mindestens einem Notantrieb**
Jet engine with at least one emergency drive
Moteur à réaction doté d'au moins un entraînement de secours

(30) Priorität: 09.04.2008 DE 102008018101
(43) Veröffentlichungstag der Anmeldung: 14.10.2009
(73) Patentinhaber: Rolls-Royce Deutschland Ltd & Co KG, 15827 Blankenfelde-Mahlow (DE)
(72) Erfinder: Rensch, Detlef, 14974 Ludwigsfelde (DE)
(74) Vertreter: Wablat, Wolfgang

(56) Entgegenhaltungen:
- EP-A- 0 189 875
- EP-A- 0 200 178
- EP-A- 0 344 454
- EP-A- 1 619 370
- DE-A1- 2 024 125
- US-A- 2 611 239
- US-A1- 2006 260 323

## Beschreibung

Die Erfindung bezieht sich auf ein Strahltriebwerk als Haupttriebwerk eines Flugzeuges, mit einem zwei Wellen umfassenden Zahnradstrang zur Verbindung einer Triebwerkswelle mit einem Hilfsgetriebe für ein mit diesem gekoppeltes, einen Generator umfassendes Hilfsgerät, wobei die erste Welle mit der Triebwerkswelle und die zweite Welle mit dem Hilfsgetriebe verbunden sind, und mit einem, eine rotierbare Komponente umfassenden Notantrieb. Ferner bezieht sich die Erfindung auf ein Verfahren zum Antrieb des Hilfsgerätes an dem Strahltriebwerk.

Stand der Technik für Strahltriebwerke ist das heutige Turbofantriebwerk. Diese Triebwerksklasse wird zunehmend verwendet, um Flugzeuge anzutreiben, die wegen des verstärkten Einsatzes von Hilfsgeräten einen erhöhten Bedarf an elektrischer Energie haben. Die elektrische Energie wird von Generatoren bereitgestellt, die von einer Triebwerkswelle über einen Zahnradstrang und ein Hilfsgetriebe angetrieben werden. Der verstärkte Einsatz elektrischer Verbraucher führt dazu, dass größere Generatoren für deren Betrieb benötigt werden, Die Generatoren sind daher schwerer und benötigen mehr Energie als bisher. Diese Energie wird bei einem zweiwelligen Strahltriebwerk von der Hochdruckwelle abgezweigt.

Vor allem betriebsbedingte Fehlerfälle verursachen eine Reihe von Einschränkungen bezüglich der Energieerzeugung für die Hilfsgeräte. Diese Einschränkungen müssen in der Triebwerkskonstruktion entsprechend berücksichtigt werden. Im Fehlerfall, das heißt bei einem Ausfall eines Triebwerks, zum Beispiel beim Start, wird die gesamte Energie, die das Flugzeugeystem einschließlich der Hilfsgeräte benötigt, vom verbleibenden zweiten Strahltriebwerk bereitgestellt.

Der größte Nachteil dieser Entwicklung ist, dass die stetige Optimierung des Flugzeugs zu einem idealen Produkt die Randbedingungen für das Strahltriebwerk verändert. Das betrifft vor allem den Bedarf des Flugzeugs an elektrischer Energie. Die dadurch bedingte Veränderung und/ oder Verschärfung der Randbedingungen, insbesondere der Betriebsfähigkeit und der Stabilität im Fehlerfall, bewirken, dass immer größere Probleme dabei auftreten, den Hochdruckkompressor stabil zu betreiben. Prinzipiell versucht man, das Strahltriebwerk mit dem geringsten möglichen Aufwand zu betreiben und Brennstoff zu sparen.

Möglich wird das, weil bei einem more-elektrischen Flugzeug unter anderem die Kabinenluft per elektrisch betriebenem Kompressor erzeugt wird und nicht durch Abzweigen eines Teilluftstroms aus dem Kompressor. Deshalb verschwinden einige Randbedingungen, z. B. das Kabinendrucklimit. Das Kabinendrucklimit ist der Druck, den bei einem konventionellen Flugzeug das Strahltriebwerk mindestens produzieren müsste, um die Kabine zu bedrücken.

Damit kann man das Strahltriebwerk so betreiben, dass es bei den Bedingungen mit niedriger Leistung wie Sinkflug oder Leerlauf am Boden gerade noch läuft und damit auch weniger Brennstoff verbraucht, Dabei muss man aber immer sicherstellen, dass im Fehlerfall, beispielsweise beim Ausfall eines Triebwerks, immer noch genug Leistung da ist, um die Bordsysteme des Flugzeugs mit elektrischer Energie zu versorgen, und zudem das verbleibende Strahltriebwerk stabil läuft.

In so einem Fall fordern die elektrischen Systeme des Flugzeugs vom Strahltriebwerk zu einen unvorhergesehenen Zeitpunkt plötzlich sehr viel mehr elektrische Leistung als normal üblich, um dann wieder auf ein normales, wenn auch etwas höheres Niveau zurückzukehren. Dieser Vorgang dauert ca. fünf Sekunden. Dieser Ausschlag muss vom Strahltriebwerk ohne Leistungsverlust überstanden werden. Technisch kann man das Problem lösen, indem man im Betrieb des Triebwerks bereits einen gewissen Puffer berücksichtigt, um den Fehlerfall abzudecken, d.h. es wird viel mehr Energie produziert, die im Fehlerfall abgegriffen werden kann.

Nachteilig ist, dass dieser Puffer Kraftstoff kostet oder gegebenenfalls Gewicht und Kosten negativ beeinflusst, da dieser Puffer immer vorgehalten werden muss.

Aus der US 3,965,673 ist ein System mit Haupttriebwerken und Hilfstriebwerken bekannt, Das System ist mit einem Notantrieb ausgerüstet, der bei Störungen eines der Hilfstriebwerke eingesetzt werden kann. Der Notantrieb treibt dann über ein Hilfsgetriebe die Hilfsgeräte, wie zum Beispiel einen Generator und Pumpen, an. Das Hilfsgetriebe ist dabei auch mit der Triebwerkswelle des Hilfstriebwerks gekoppelt. Der Notantrieb kann als Starter für eines der Hilfstriebwerke eingesetzt werden.

Aus US 2006/0260323 Al ist ein Strahltriebwerk mit einer Hochdruckturbine bekannt, deren Triebwerkswelle über einen zwei Wellen umfassenden Zahnradstrang mit einem Hilfsgetriebe verbunden ist. Mit diesem sind über Kupplungen einerseits eine Treibstoff- und eine Ölpumpe und andererseits ein Generator und eine Pumpe verbunden. Der Generator und die Pumpe können auch über Luftturbinen an getrieben werden, die an Luftventile angeschlossen sind und über diese mit der erforderlichen Druckluft aus dem Triebwerk versorgt werden. Dabei werden die Kupplungen und die Luftventile manuell über Schalter aus dem Cockpit heraus bedient,

Nachteilig hierbei ist, dass die für den Notantrieb erforderliche Antriebsenergie in Form der für die Luftturbinen erforderlichen Druckluft vom Strahltriebwerk selbst erzeugt werden muss. Wenn aber der Hochdruck-Kompressor der Hochdruckturbine überlastet ist, was z. B, durch eine zu hohe Leistungsanforderung vom Generator der Fall sein kann, muss vom überlasteten Hochdruck-Kompressor noch zusätzliche Leistung zum Antrieb des Notantriebes abgefordert werden.

Dieser Stand der Technik ist aufwendig und kompliziert. Außerdem ist keine Einrichtung vorgesehen, um Fehlerfälle der Haupttriebwerke zu überbrücken, die aus dem Flugzeugsystemen herrühren.

Der Erfindung liegt von daher die Aufgabe zu Grunde, ein Strahltriebwerk als Haupttriebwerk eines Flugzeuges mit einem Notantrieb in einfacher Anordnung zu schaffen und den Notantrieb derart anzuordnen und auszubilden, dass der Notantrieb bei hoher Energieausbeute des Flugtriebwerkes zur Entlastung des Flugtriebwerkes und damit zur Entlastung der Triebwerkswelle eingesetzt werden kann.

Diese Aufgabe wird erfindungsgemäß bei einem Strahltriebwerk mit einem, eine rotierbare Komponente umfassenden Notantrieb dadurch gelöst, dass die rotierbare Komponente des Notantriebes an der ersten Welle des Zahnradstranges angebracht ist. Dadurch greift die rotierbare Komponente des Notantriebes am Ende der mit der Triebwerkswelle verbundenen ersten Welle des Zahnradstranges und damit vor dem Hilfsgetriebe an, so dass der Notantrieb für das Hilfsgerät, insbesondere ein Generator, im Fehlerfall bei hoher Energieausbeute des Strahltriebwerkes in erheblichem Umfang zur Entlastung der Triebwerkswelle beitrag gen kann.

Damit kann die erforderliche Antriebsleistung für das Hilfsgerät, insbesondere ein Generator, über den Notantrieb schnell bzw. kurzfristig innerhalb von weniger als 5 sec, und unabhängig vom Belastungszustand der Triebwerkswelle zur Verfügung gestellt werden, um die erforderliche Leistung für das Hilfsgerät, insbesondere ein Generator, aufzubringen.

Diese Anordnung ist einfach im Aufbau und ermöglicht bei einem Fehlerfall des Strahltriebwerks einen Antrieb der Hilfsgeräte mittels des Notantriebs. Der Notantrieb dient dabei im Fehlerfall bei hoher Energieausbeute zur Entlastung der Triebwerkswelle. Es ist keine zusätzliche Energieübertragungseinrichtung erforderlich.

Der Notantrieb für das Hilfsgerät kann ein strömungstechnischer Notantrieb sein, der die erforderliche Antriebsleistung für das Hilfsgerät schnell zur Verfügung stellen kann.

Erfindungsgemäß ist der Notantrieb aus einer mit der ersten Welle des Zahnradstranges in rotierender Verbindung stehenden Notturbine und einem mit dieser über eine Gasleitung verbundenen Gasgenerator gebildet. Die Kombination aus Gasgenerator und Notturbine ist eine einfache Aus führungsform des Notantriebs. Wenn mehrere Gasgeneratoren vorhanden sind, ist das System außerdem mehrfach nutzbar. Die Notturbine ist auf der einen Welle des Zahnradstrangs angeordnet. Auf diese Weise kann der Notantrieb platzsparend am Strahltriebwerk untergebracht werden. Es werden zudem keine zusätzlichen Getriebebestandteile benötigt, wie z. B. gemäß US 3,965,673, so dass auch Gewicht eingespart wird.

Insbesondere umfasst der Zahnradstrang mindestens zwei Wellen, wobei die beiden Wellen zwischen der Triebwerkswelle und der Notturbine lösbar mit einander verbunden sind. Dadurch kann die Notturbine bei Bedarf von der Triebwerkswelle abgekoppelt werden.

Des Weiteren weist der Gasgenerator einen Kontrollmechanismus auf. Dadurch wird gewährleistet, dass der Gasgenerator sofort gezündet wird, wenn am Strahltriebwerk ein Fehlerfall eintritt.

Weiterhin besteht die Lösung der Aufgabe in einem Verfahren zum Antrieb des Hilfsgeräte an dem Strahltriebwerk. Dabei wird zumindest ein Teil des Zahnradstrangs angetrieben, der über das Hilfsgetriebe die für das Hilfsgerät erforderliche Drehzahl erzeugt, wobei die Notturbine zusammen mit der Welle des Teils des Zahnradstrangs rotiert. Dieses Verfahren ermöglicht auf einfache Weise den Antrieb des Hilfsgeräts ohne zusätzliche Getriebekomponenten. Die Notturbine rotiert platzsparend mit der Welle des Zahnradstrangs mit.

Bei diesem Verfahren kann die Triebwerkswelle und/oder die Notturbine zumindest einen Teil des Zahnradstranges antreiben. Diese Alternativen ermöglichen einen Antrieb des Hilfsgeräts mittels der Notturbine, der Triebwerkswelle oder beiden, je nach Bedarf.

Bei einem Fehlerfall des Strahltriebwerks treibt Gas aus dem Gasgenerator die Notturbine an, und die Notturbine treibt den Teil des Zahnradstrangs an. Dies bewirkt eine schnelle Erzeugung von Rotationsenergie, mit der das Hilfsgerät angetrieben wird.

Vorzugsweise wird der Gasgenerator gestartet, wenn der Kontrollmechanismus ausgelöst wird. Dadurch wird gewährleistet, dass der Gasgenerator schnell gezündet wird, wenn ein Fehlerfall eintritt.

Insbesondere kann der Kontrollmechanismus durch ein Signal vom Cockpit eines Flugzeugs ausgelöst werden. Auf diese Weise kann der Kontrollmechanismus sofort ausgelöst werden, wenn im Cockpit ein Fehlerfall des Strahltriebwerks gemeldet wird.

Alternativ kann der Kontrollmechanismus durch ein Signal vom Strahltriebwerk ausgelöst werden. In diesem Fall kann der Kontrollmechanismus direkt und schnell auf einen Fehlerfall des Strahltriebwerks reagieren.

Das Signal kann auf einem Messwert des Eingangsmoments des Hilfsgetriebes beruhen. Dieser Messwert gibt direkt Auskunft über den Bedarf an Rotationsenergie am Hilfsgetriebe.

Das Signal kann auch auf einem Messwert von einem Anschlusskabel des elektrischen Generators beruhen. Dieser Messwert gibt Auskunft über die Ausgangsleistung des elektrischen Generators, anhand derer der Bedarf Rotationsenergie am elektrischen Generator ermittelt werden kann.

In einer besonderen Ausgestaltung der Erfindung kann der Zahnradstrang zwischen der Triebwerkswelle und der Notturbine unterbrochen werden. Dadurch kann der Antrieb des Hilfsgerätes unabhängig von der Triebwerkswelle durch den Notantrieb erfolgen.

Außerdem kann der Notantrieb die Triebwerkswelle antreiben. Dieser Einsatz des Notantriebs als Starter des Strahltriebwerkes ermöglicht ein Einsparen einer weiteren Einrichtung zum Starten des Strahltriebwerkes. Das System erlaubt es also, im Fehlerfall das Strahltriebwerk erst zu beschleunigen, bevor die Leistungsentnahme aus der Triebwerkswelle signifikant erhöht wird.

Bei einem fehlerfreien Betrieb des Strahltriebwerks treibt die Triebwerkswelle den Zahnradstrang an, und die Notturbine dreht sich dabei auf der Welle des Zahnradstrangs unbeaufschlagt mit. Die Notturbine braucht also bei normalem Betrieb des Strahltriebwerks nicht vom Zahnradstrang entfernt oder abgekoppelt zu werden.

Außerdem kann die Notturbine die Triebwerkswelle kontinuierlich antreiben, indem Strömungsenergie aus dem Niederdrucksystem oder einem Hilfssystem kontinuierlich die Notturbine antreibt.

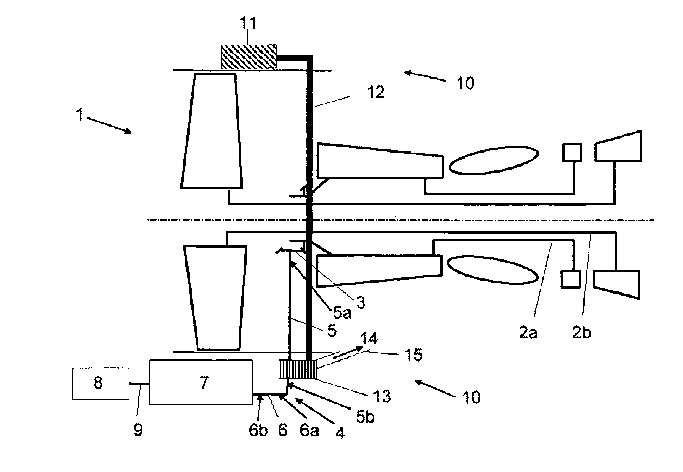

Im Folgenden wird ein Ausführungsbeispiel der Erfindung anhand einer einzigen Figur näher erläutert. Es zeigt die

Fig. eine schematische Darstellung des erfindungsgemäßen Strahltriebwerks mit dem Notantrieb.

Die Fig. zeigt ein Strahltriebwerk 1 in Form eines Turbofantriebwerks, das u.a. zwei Triebwerkswellen umfasst, nämlich eine Hochdruckwelle 2a und eine Niederdruckwelle 2b. Außerdem weist das Strahltriebwerk 1 einen Zahnradstrang 4 mit einem Kegelrad 3, einer ersten Welle 5 und einer zweiten Welle 6 sowie ein Hilfsgetriebe 7 auf. Zu der Anordnung gehört auch ein Hilfsgerät 8 mit einer Antriebswelle 9.

Des Weiteren ist in der Fig. ein Notantrieb 10 dargestellt. Der Notantrieb 10 umfasst einen Gasgenerator 11, eine Gasleitung 12 und eine Notturbine 13 als rotierbare Komponente.

Die Hochdruckwelle 2a des Strahltriebwerks 1 ist hohl und nimmt die Niederdruckwelle 2b in ihrem Innern auf. Der Zahnradstrang 4 erstreckt sich von der Hochdruckwelle 2a im Innern des Strahltriebwerks aus nach außen und endet am Hilfsgetriebe 7.

Die erste Welle 5 des Zahnradstrangs 4 weist ein erstes Ende 5a und ein zweites Ende 5b auf und verläuft in einem Winkel zwischen 0° und 90° zur Hochdruckwelle 2a. Die Hochdruckwelle 2a ist über eine nicht dargestellte Verzahnung mit dem Kegelrad 3 des Zahnradstrangs 4 im Eingriff. Das Kegelrad 3 ist fest mit dem ersten Ende 5a der ersten Welle 5 des Zahnradstrangs 4 verbunden. Die erste Welle 5 trägt an ihrem zweiten Ende 5b die Notturbine 13.

Die zweite Welle 6 weist ein erstes Ende 6a und ein zweites Ende 6b auf und koppelt die erste Welle 5 mechanisch mit dem Hilfsgetriebe 7. Die erste Welle 5 ist an ihrem zweiten Ende 5b über eine nicht dargestellte Verzahnung mit einer ebenfalls nicht dargestellten ersten Verzahnung am ersten Ende 6a der zweiten Welle 6 des Zahnradstrangs 4 im Eingriff. Die zweite Welle 6 weist an ihrem zweiten Ende 6b eine zweite nicht dargestellte Verzahnung auf, die mit einem oder mehreren nicht dargestellten Zahnrädern des Hilfsgetriebes 7 im Eingriff ist. Die Zahnräder des Hilfsgetriebes 7 sind mit einem nicht dargestellten Antriebszahnrad an der Antriebswelle 9 des Hilfsgeräts 8, insbesondere eines elektrischen Generators, im Eingriff.

Der Gasgenerator 11 des Notantriebs 10 ist außerhalb des Strahltriebwerks 1 angeordnet. Die Gasleitung 12 verbindet einen nicht dargestellten Gasauslass des Gasgenerators 11 mit einem nicht dargestellten Gaseinlass an der Notturbine 13. Die Notturbine 13 befindet sich am zweiten Ende 5b der ersten Welle 5 und ist durch eine geeignete Welle-Nabe-Verbindung an ihm befestigt. Die Notturbine 13 weist eine Abgasleitung 15 auf.

Während des Betriebs des Strahltriebwerks 1 kann es zu Fehlerfällen, beispielsweise einem Fünf-Sekunden-Fehlerfall oder einem Ein-Sekunden-Fehlerfall kommen. Dabei muss die Versorgung des Flugzeugs mit elektrischer Energie aufrechterhalten werden. Dies erfolgt mittels des Notantriebs 10. Beim Eintritt eines Fehlerfalls wird der Gasgenerator 11 des Notantriebs 10 aufgrund eines Signals vom Cockpit des Flugzeugs oder direkt vom Strahltriebwerk automatisch gezündet.

Das unter Druck ausströmende Gas wird durch die Gasleitung 12 zur Notturbine 13 geleitet, treibt die Notturbine 13 an und verlässt die Notturbine 13 als Abgas 14 durch die Abgasleitung 15. Die Notturbine 13 treibt die erste Welle 5 an. Die Rotationsenergie wird über die Verzahnung am zweiten Ende 5b der ersten Welle 5 auf die Verzahnung am ersten Ende 6a der zweiten Welle 6 übertragen.

Die zweite Welle 6 gibt die Rotationsenergie an die Verzahnung an ihrem zweiten Ende 6b weiter. Diese Verzahnung treibt die Zahnräder des Hilfsgetriebes 7 an, die wiederum das Antriebszahnrad des Hilfsgeräts 8, insbesondere des elektrischen Generators, antreiben. Das Hilfsgerät kann so auch bei einem Fehlerfall des Strahltriebwerks 1 arbeiten.

Außerdem treibt die Notturbine 13 über die erste Welle 5 und das Kegelrad 3 als Starter die Hochdruckwelle 2a an, so dass der normale Betrieb des Strahltriebwerks 1 wieder einsetzen kann.

### Bezugszeichenliste

- 1: Strahltriebwerk
- 2a: Hochdruckwelle
- 2b: Niederdruckwelle
- 3: Kegelrad
- 4: Zahnradstrang
- 5: erste Welle
- 5a: erstes Ende
- 5b: zweites Ende
- 6: zweite Welle
- 6a: erstes Ende
- 6b: zweites Ende
- 7: Hilfsgetriebe
- 8: Hilfsgerät
- 9: Antriebswelle
- 10: Notantrieb
- 11: Gasgenerator
- 12: Gasleitung
- 13: Notturbine
- 14: Abgas
- 15: Abgasleitung

## Patentansprüche

1. Strahltriebwerk (1) als Haupttriebwerk eines Flugzeugs, mit einem zwei Wellen (5, 6) umfassenden Zahnradstrang (4) zur Verbindung einer Triebwerkswelle (2a) mit einem Hilfsgetriebe (7) für ein mit diesem gekoppeltes, einen Generator umfassendes Hilfsgerät (8), wobei die erste welle (5) mit der Triebwerkswelle (2a) und die zweite welle (6) mit dem Hilfsgetriebe (7) verbunden sind, und mit einem, eine rotierbare Komponente umfassenden Notantrieb,
**dadurch gekennzeichnet,**
**dass** die rotierbare Komponente des Notantriebes an der ersten Welle (5) des Zahnradstrangs (4) angebracht ist.

2. Strahltriebwerk nach Anspruch 1, **dadurch gekennzeichnet, dass** der Notantrieb (10) aus einer mit der ersten Welle (5) des Zahnradstranges (4) in rotierender Verbindung stehenden Notturbine (13) und einem mit dieser über eine Gasleitung (12) verbundenen Gasgenerator (11) gebildet ist.

3. Strahltriebwerk nach Anspruch 2, **dadurch gekennzeichnet, dass** der Gasgenerator (11) einen Kontrollmechanismus aufweist.

4. Verfahren zum Antrieb des Hilfsgerätes (8) an einem Strahltriebwerk (1) nach einem der Ansprüche 1 bis 3, **dadurch gekennzeichnet, dass** von der Notturbine (13) die erste Welle (5) des Zahnradstranges (4) angetrieben wird, der über das Hilfsgetriebe (7) die für das Hilfsgerät (8), insbesondere einen Generator, erforderliche Drehzahl erzeugt, und dass die Notturbine (13) zusammen mit der ersten Welle (5) des Zahnradstranges (4) rotiert.

5. Verfahren nach Anspruch 4, **dadurch gekennzeichnet, dass** in einem Fehlerfall des Strahltriebwerks (1) das Gas aus dem Gasgenerator (11) die Notturbine (13) und diese den die Notturbine (13) die erste Welle (5) des Zahnradstranges (4) antreibt.

6. Verfahren nach Anspruch 5, **dadurch gekennzeichnet, dass** der Gasgenerator (11) gestartet wird, wenn der Kontrollmechanismus ausgelöst wird.

7. Verfahren nach Anspruch 6, **dadurch gekennzeichnet, dass** der Kontrollmechanismus durch ein Signal vom Cockpit eines Flugzeugs ausgelöst wird.

8. Verfahren nach Anspruch 6, **dadurch gekennzeichnet, dass** der Kontrollmechanismus durch ein Signal vom Strahltriebwerk (1) ausgelöst wird.

9. Verfahren nach Anspruch 6 oder 7, **dadurch gekennzeichnet, dass** das Signal auf einem Messwert des Eingangsmoments des Hilfsgetriebes (7) beruht.

10. Verfahren nach Anspruch 6 oder 7, **dadurch gekennzeichnet, dass** das Signal auf einem Messwert von einem Anschlusskabel des elektrischen Generators beruht.

11. Verfahren nach einem der Ansprüche 4 bis 10, **dadurch gekennzeichnet, dass** der Zahnradstrang (4) zwischen der Triebwerkswelle (2a) und der Notturbine (13) unterbrochen wird.

12. Verfahren nach einem der Ansprüche 4 bis 10, **dadurch gekennzeichnet, dass** der Notantrieb (10) über die erste Welle (5) die Triebwerkewelle (2a) antreibt.

13. Verfahren nach Anspruch 4, **dadurch gekennzeichnet, dass** in einem fehlerfreien Betrieb des Strahltriebwerks (1) die Triebwerkswelle (2a) die erste Welle (5) des Zahnradstranges (4) antreibt und die Notturbine (13) dabei auf der ersten Welle (5) des Zahnradstranges (4) unbeaufschlagt mitdreht.

14. Verfahren nach Anspruch 4, **dadurch gekennzeichnet, dass** Strömungsenergie aus dem Niederdrucksystem des Strahltriebwerkes kontinuierlich die Notturbine (13) antreibt.

## Claims

1. Jet engine (1) as main power plant of an aircraft with a gear train (4) including two shafts (5, 6) for connecting one engine shaft (2a) to an auxiliary gearbox (7) for an auxiliary equipment (8) coupled to the auxiliary gearbox (7) and including one generator, with the first shaft (5) being connected to the engine shaft (2a) and the second shaft (6) to the auxiliary gearbox (7), and with an emergency drive unit having one rotatable component, **characterized in that** the rotatable component of the emergency drive unit is attached to the first shaft (5) of the gear train (4).

2. Jet engine in accordance with Claim 1, **characterized in that** the emergency drive unit (10) is formed by an emergency turbine (13) rotatably connected to the first shaft (5) of the gear train (4) and a gas generator (11) connected to the emergency turbine (13) via one gas duct (12).

3. Jet engine in accordance with Claim 2, **characterized in that** the gas generator (11) is provided with a control mechanism.

4. Method for driving the auxiliary equipment (8) on a jet engine (1) in accordance with one of the Claims 1 to 3, **characterized in that** the first shaft (5) of the gear train (4) is driven by the emergency turbine (13), that the gear train (4) produces the rotational speed required for the auxiliary equipment (8), especially a generator, via the auxiliary gearbox (7) and that the emergency turbine (13) co-rotates with the first shaft (5) of the gear train (4).

5. Method in accordance with Claim 4, **characterized in that** in case of failure of the jet engine (1) the gas from the gas generator (11) drives the emergency turbine (13) and that the emergency turbine (13) drives the first shaft (5) of the gear train (4).

6. Method in accordance with Claim 5, **characterized in that** the gas generator (11) is started upon triggering the control mechanism.

7. Method in accordance with Claim 6, **characterized in that** the control mechanism is triggered by a signal from the cockpit of an aircraft.

8. Method in accordance with Claim 6, **characterized in that** the control mechanism is triggered by a signal from the jet engine (1).

9. Method in accordance with Claim 6 or 7, **characterized in that** the signal is based on a measuring value of the input torque of the auxiliary gearbox (7).

10. Method in accordance with Claim 6 or 7, **characterized in that** the signal is based on a measuring value from a connecting cable of the electric generator.

11. Method in accordance with one of the Claims 4 to 10, **characterized in that** the gear train (4) is disconnected between the engine shaft (2a) and the emergency turbine (13).

12. Method in accordance with one of the Claims 4 to 10, **characterized in that** the emergency drive unit (10) drives the engine shaft (2a) via the first shaft (5).

13. Method in accordance with Claim 4, **characterized in that** during faultless operation of the jet engine (1) the engine shaft (2a) drives the first shaft (5) of the gear train (4) and that the emergency turbine (13) co-rotates freely on the first shaft (5) of the gear train (4).

14. Method in accordance with Claim 4, **characterized in that** flow energy from the low-pressure system of the jet engine continuously drives the emergency turbine (13).

## Revendications

1. Réacteur (1) en tant que moteur principal d'un avion, avec un train d'engrenages (4) comprenant deux arbres (5, 6) destinés à relier un arbre de moteur (2a) à une transmission auxiliaire (7) pour un appareil auxiliaire (8) couplé à celle-ci et comprenant un générateur, le premier arbre (5) étant relié à l'arbre de moteur (2a) et le second arbre (6) à la transmission auxiliaire (7), et avec un entraînement de secours comprenant un composant entraînable en rotation, **caractérisé en ce que** le composant entraînable en rotation de l'entraînement de secours est monté sur le premier arbre (5) du train d'engrenages (4).

2. Réacteur selon la revendication n° 1, **caractérisé en ce que** l'entraînement de secours (10) est constitué d'une turbine de secours (13) reliée en rotation au premier arbre (5) du train d'engrenages (4) et d'un générateur de gaz (11) relié à ladite turbine par une conduite de gaz (12).

3. Réacteur selon la revendication n° 2, **caractérisé en ce que** le générateur de gaz (11) présente un mécanisme de contrôle.

4. Procédé pour entraîner l'appareil auxiliaire (8) sur un réacteur (1) selon une des revendications n° 1 à n° 3, **caractérisé en ce que** la turbine de secours (13) entraîne le premier arbre (5) du train d'engrenages (4) qui, par l'intermédiaire de la transmission auxiliaire (7), produit le régime requis pour l'appareil auxiliaire (8), en particulier un générateur, et que la turbine de secours (13) tourne conjointement avec le premier arbre (5) du train d'engrenages (4).

5. Procédé selon la revendication n° 4, **caractérisé en ce qu'**en cas de panne du réacteur (1), le gaz provenant du générateur de gaz (11) entraîne la turbine de secours (13) et celle-ci entraîne le premier arbre (5) du train d'engrenages (4).

6. Procédé selon la revendication n° 5, **caractérisé en ce que** le générateur de gaz (11) est mis en marche quand le mécanisme de contrôle est déclenché.

7. Procédé selon la revendication n° 6, **caractérisé en ce que** le mécanisme de contrôle est déclenché par un signal émis depuis le poste de pilotage d'un avion.

8. Procédé selon la revendication n° 6, **caractérisé en ce que** le mécanisme de contrôle est déclenché par un signal provenant du turboréacteur (1).

9. Procédé selon la revendication n° 6 ou n° 7, **caractérisé en ce que** le signal repose sur une valeur mesurée du couple d'entrée de la transmission auxiliaire (7).

10. Procédé selon la revendication n° 6 ou n° 7, **caractérisé en ce que** le signal repose sur une valeur mesurée d'un câble de connexion du générateur électrique.

11. Procédé selon une des revendications n° 4 à n° 10, **caractérisé en ce que** le train d'engrenages (4) est interrompu entre l'arbre de moteur (2a) et la turbine de secours (13).

12. Procédé selon une des revendications n° 4 à n° 10, **caractérisé en ce que** l'entraînement de secours (10) entraîne l'arbre de moteur (2a) par l'intermédiaire du premier arbre (5).

13. Procédé selon la revendication n° 4, **caractérisé en ce qu'**en cas de fonctionnement correct du réacteur (1), l'arbre de moteur (2a) entraîne le premier arbre (5) du train d'engrenages (4), et ce faisant, la turbine de secours (13) tourne librement sur le premier arbre (5) du train d'engrenages (4).

14. Procédé selon la revendication n° 4, **caractérisé en ce que** de l'énergie d'écoulement provenant du système basse pression du réacteur entraîne en continu la turbine de secours (13).
